# EUROPÄISCHE PATENTSCHRIFT

(11) **EP 0 989 936 B1**
(45) Veröffentlichungstag und Bekanntmachung des Hinweises auf die Patenterteilung: **02.05.2003**
(21) Anmeldenummer: 98966594.8
(22) Anmeldetag: 30.12.1998
(51) Int. Cl.: B60K 15/077

(54) **KRAFTSTOFFFÖRDEREINRICHTUNG**
FUEL DELIVERY DEVICE
DISPOSITIF DE REFOULEMENT DE CARBURANT

(30) Priorität: 11.04.1998 DE 19816317
(43) Veröffentlichungstag der Anmeldung: 05.04.2000
(73) Patentinhaber: ROBERT BOSCH GMBH, 70442 Stuttgart (DE)
(72) Erfinder: KLEPPNER, Stephan, D-75015 Bretten (DE); FRANK, Kurt, D-73614 Schorndorf (DE); MIHATSCH, Steffen, D-71636 Ludwigsburg (DE); HUFNAGEL, Klaus-Dieter, D-71696 Möglingen (DE); BALLIER, Günter-Paul, D-71739 Oberriexingen (DE); GERHARD, Albert, D-71732 Tamm (DE); JAUCH, Gerhard, D-71706 Markgröningen (DE)
(86) Internationale Anmeldenummer: DE9803814
(87) Internationale Veröffentlichungsnummer: WO99052732

(56) Entgegenhaltungen:
- WO-A-89/07712
- WO-A-93/25403
- DE-A- 4 333 969
- FR-A- 2 711 338
- US-A- 5 797 373
- PATENT ABSTRACTS OF JAPAN vol. 017, no. 053 (M-1361), 3. Februar 1993 & JP 04 265463 A (JIDOSHA DENKI KOGYO CO LTD), 21. September 1992 & JP 04 265463 A

## Beschreibung

### Stand der Technik

Die Erfindung geht aus von einer Kraftstoffördereinrichtung nach der Gattung des Anspruchs 1.

Eine gattungsgemäße Kraftstoffördereinrichtung mit den Merkmalen des Oberbegriffs des Anspruchs 1 ist bereits aus der DE-A-4 333 969 bekannt.

Eine solche Kraftstoffördereinrichtung ist durch die DE 42 19 516 A1 bekannt. Diese Kraftstoffördereinrichtung dient zum Fördern von Kraftstoff aus einem Vorratstank zur Brennkraftmaschine eines Kraftfahrzeugs. Im Vorratstank ist ein Behälter angeordnet, aus dem ein Förderaggregat Kraftstoff zur Brennkraftmaschine fördert. In den Behälter integriert sind mehrere Saugstrahlpumpen, durch die Kraftstoff aus dem Vorratstank in den Behälter gefördert wird. An die Saugstrahlpumpen sind Saugleitungen angeschlossen, die an verschiedenen Stellen im Vorratstank münden. Hierdurch ist sichergestellt, daß auch bei relativ leerem Vorratstank und beispielsweise infolge des Befahrens einer Steigung oder einer Kurve ungleicher Verteilung des Kraftstoffs im Vorratstank der Behälter sicher mit Kraftstoff befüllt werden kann. Bei dieser Ausführung der Kraftstoffördereinrichtung ist eine aufwenig herzustellende, spezielle Ausführung des Behälters mit den in diesem integrierten Saugstrahlpumpen erforderlich.

### Vorteile der Erfindung

Die erfindungsgemäße Kraftstoffördereinrichtung mit den Merkmalen gemäß Anspruch 1 hat demgegenüber den Vorteil, daß der Behälter einfach ausgebildet sein kann und die Saugstrahlpumpe an diesem als separate Baueinheit auch nachträglich befestigt werden kann. Es kann hierbei ein üblicher Behälter verwendet werden, an dem nachträglich die Saugstrahlpumpe befestigt werden kann. Die erfindungsgemäße Kraftstoffördereinrichtung mit den Merkmalen des Anspruchs 5 hat demgegenüber ebenfalls den Vorteil, daß der Behälter und das Verschlußelement einfach ausgebildet sein können und die Saugstrahlpumpe am Verschlußelement als separate Baueinheit auch nachträglich befestigt werden kann.

In den abhängigen Ansprüchen sind vorteilhafte Ausgestaltungen und Weiterbildungen der erfindungsgemäßen Kraftstoffördereinrichtung angegeben.

### Zeichnung

Mehrere Ausführungsbeispiel der Erfindung sind in der Zeichnung dargestellt und in der nachfolgenden Beschreibung näher erläutert. Es zeigen Figur 1 ausschnittsweise einen Vorratstank mit einer Kraftstoffördereinrichtung gemäß einem ersten Ausführungsbeispiel in einem vertikalen Längsschnitt, Figur 2 die Kraftstoffördereinrichtung gemäß einem zweiten Ausführungsbeispiel, Figur 3 die Kraftstoffördereinrichtung gemäß einem dritten Ausführungsbeispiel, Figur 4 den Vorratstank in einem vertikalen Längsschnitt und Figur 5 den Vorratstank in einem horizontalen Längsschnitt.

### Beschreibung der Ausführungsbeispiele

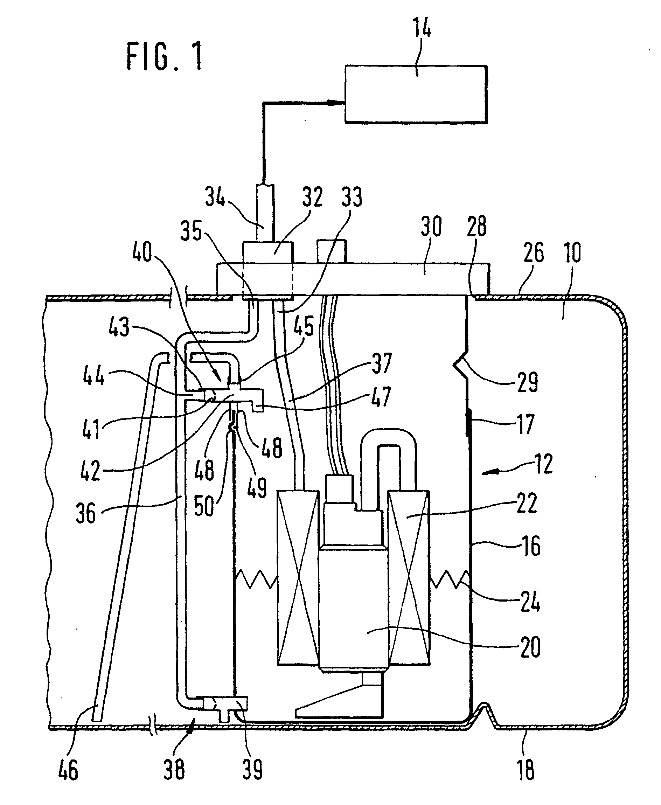

In den Figuren 1 bis 3 ist ausschnittsweise ein Kraftstoffvorratstank 10 eines Kraftfahrzeugs dargestellt, in dem eine Kraftstoffördereinrichtung 12 zum Fördern von Kraftstoff aus dem Vorratstank 10 zur Einspritzanlage der Brennkraftmaschine 14 des Kraftfahrzeugs angeordnet ist. Die Kraftstoffördereinrichtung 12 weist einen topfförmigen Behälter 16 auf, der auf einem Boden 18 des Vorratstanks 10 aufsitzt und in nicht näher dargestellter Weise am Boden 18 fixiert sein kann. Der Behälter 16 kann beispielsweise aus kraftstoffbeständigem Kunststoff bestehen und ist an seinem oberen Ende offen. In den Behälter 16 ist ein Förderaggregat 20 eingesetzt, das während seines Betriebs Kraftstoff aus dem Behälter 16 ansaugt und zur Brennkraftmaschine 14 fördert. Das Förderaggregat 20 weist einen Pumpenteil und einen diesen antreibenden Motorteil, insbesondere mit einem elektrischen Antriebsmotor auf. Im Behälter 16 kann außerdem ein Filter 22 angeordnet sein, durch das der vom Förderaggregat 20 geförderte Kraftstoff bevor er zur Brennkraftmaschine 14 gefördert wird, gefiltert wird. Das Filter 22 kann das Förderaggregat 20 umgebend im Behälter 16 angeordnet sein. Das Förderaggregat 20 kann über schwingungsdämpfende Elemente 24 im Behälter 16 gelagert sein.

Der Vorratstank 10 weist in einer oberen Wand 26 eine Öffnung 28 auf, durch die der Behälter 16 mit dem in diesem angeordneten Förderaggregat 20 in den Vorratstank 10 eingeführt werden kann. Die Öffnung 28 ist mittels eines Verschlußelements 30 in Form eines Flansches verschließbar. Durch das Verschlußelement 30 können hydraulische und/oder elektrische Leitungen zur Verbindung des Förderaggregats 20 mit der Brennkraftmschine 14 bzw. mit einer Stromquelle für die Versorgung des Antriebsmotors des Förderaggregats 20 geführt sein. Zwischen dem Verschlußelement 30 und dem Behälter 16 kann ein federndes Element 29 eingespannt sein, durch das der Behälter 16 gegen den Boden 18 des Vorratstanks 10 gedrückt wird.

In Figur 1 ist die Kraftstoffördereinrichtung 12 gemäß einem ersten Ausführungsbeispiel dargestellt. Am Verschlußelement 30 ist ein Druckregler 32 angeordnet, der einen mit der Druckseite des Förderaggregats 20 verbundenen Zulauf 33, einen mit der Brennkraftmaschine 14 verbundenen Ablauf 34 und einen in den Vorratstank 10 mündenden Rücklauf 35 aufweist, durch den bei Überschreiten eines bestimmten Drucks vom Förderaggregat 20 geförderter Kraftstoff abgesteuert wird. Alternativ zu dieser Anordnung kann der Druckregler 32 auch nahe der Brennkraftmaschine 14 angeordnet sein, wobei dann vom Druckregler 32 zum Vorratstank 10 eine Rücklaufleitung führt, durch die vom Druckregler 32 abgesteuerter Kraftstoff in den Vorratstank 10 zurückfließen kann. An den Rücklauf 35 des Druckreglers 32 ist eine im Vorratstank 10 verlaufende Leitung 36 angeschlossen. Der Zulauf 33 des Druckreglers 32 ist über eine Leitung 37 mit der Druckseite des Förderaggregats 20 verbunden.

Am oberen Rand 17 des Behälters 16 ist als separate Baueinheit an diesem eine Saugstrahlpumpe 40 befestigt. Die Saugstrahlpumpe 40 ist durch eine Baueinheit gebildet, die eine Treibdüse 41, ein dieser nachgeordnetes Mischrohr 42, einen in die Treibdüse 41 mündenden Anschluß 43 für eine Treibleitung 44 und einen in das Mischrohr 42 mündenden Anschluß 45 für eine Saugleitung 46 aufweist. Der Endbereich 47 des Mischrohrs 42 kann nach unten abgewinkelt sein. Die Anschlüße 43 und 45 der Baueinheit sind als Stutzen ausgebildet, auf die die Treibleitung 44 bzw. die Saugleitung 46 aufgesteckt sind. Die am Anschluß 43 der Baueinheit der Saugstrahlpumpe 40 angeschlossene Treibleitung 44 kann von der an den Rücklauf 35 des Druckreglers 32 angeschlossenen Leitung 36 abzweigen oder durch die Leitung 36 selbst gebildet sein. Die Leitung 36 sowie die Treibleitung 44 können als starre oder flexible Rohre, sogenannte Wellrohre, aus Kunststoff oder Metall oder als flexible Schläuche ausgebildet sein. Die mit dem in das Mischrohr 42 mündenden Anschluß 45 verbundene Saugleitung 46 kann ebenfalls als starres oder flexibles Rohr oder als flexibler Schlauch ausgebildet sein. Die Saugleitung 46 mündet im Vorratstank 10 an einer vom Behälter 16 entfernten Stelle nahe dem Boden 18 des Vorratstanks 10. Insbesondere mündet die Saugleitung 46 nahe einem in Fahrtrichtung des Fahrzeugs gesehen hinteren Rand des Vorratstanks 10, in dem sich bei Befahren einer Steigung durch das Fahrzeug der im Vorratstank 10 befindliche Kraftstoff sammelt.

Die die Saugstrahlpumpe 40 bildende Baueinheit besteht vorzugsweise aus kraftstoffbeständigem Kunststoff und kann insbesondere durch Spritzgießen einstückig hergestellt sein. Die die Saugstrahlpumpe 40 bildende Baueinheit weist zwei von dieser nach unten abstehende Wandungen 48 auf, die in radialer Richtung bezüglich des Behälters 16 zueinander entsprechend der Wandstärke des Behälters 16 beabstandet sind und entsprechend der Krümmung der Wand des Behälters 16 gekrümmt ausgebildet sind. Die Baueinheit 40 ist von oben her auf den Rand 17 des Behälters 16 aufgesteckt, derart, daß der Rand 17 des Behälters 16 zwischen den Wandungen 48 angeordnet ist. Der radiale Abstand zwischen den beiden Wandungen 48 der Baueinheit 40 kann etwas geringer sein als die Wandstärke des Behälters 16, wodurch erreicht wird, daß diese beim Aufstecken auf den Rand 17 des Behälters 16 federnd auseinandergedrückt werden und ein sicherer Halt der Baueinheit 40 am Behälter 16 erreicht wird.

Um den Halt der Baueinheit 40 am Behälter 16 weiter zu verbessern kann zusätzlich eine in Figur 1 dargestellte Rastverbindung vorgesehen sein, bei der beispielsweise eine oder beide Wandungen 48 der Baueinheit 40 oder zumindest Teile von diesen in radialer Richtung federnd ausgebildet sind und am Rand 17 des Behälters 16 in radialer Richtung einrastbar sind. Beispielsweise kann eine Wandung 48 eine der Wand des Behälters 16 zugewandte Rastnase 49 aufweisen, die in einer Vertiefung 50 oder einer Schulter der Wand des Behälters 16 einrastbar ist. Es kann auch vorgesehen sein, daß die Wand des Behälters 16 eine Rastnase aufweist und eine Wandung 48 der Baueinheit 40 eine Vertiefung oder Schulter aufweist, an der die Rastnase einrastbar ist.

Die an den Rücklauf 35 des Druckreglers 32 angeschlossene Leitung 36 kann bis nahe dem Boden 18 des Vorratstanks 10 geführt sein und dort kann eine weitere Saugstrahlpumpe 38 angeschlossen sein, durch die Kraftstoff aus einem direkt neben dem Behälter 16 liegenden Bereich des Vorratstanks 10 durch eine Öffnung 39 in den Behälter 16 gefördert wird.

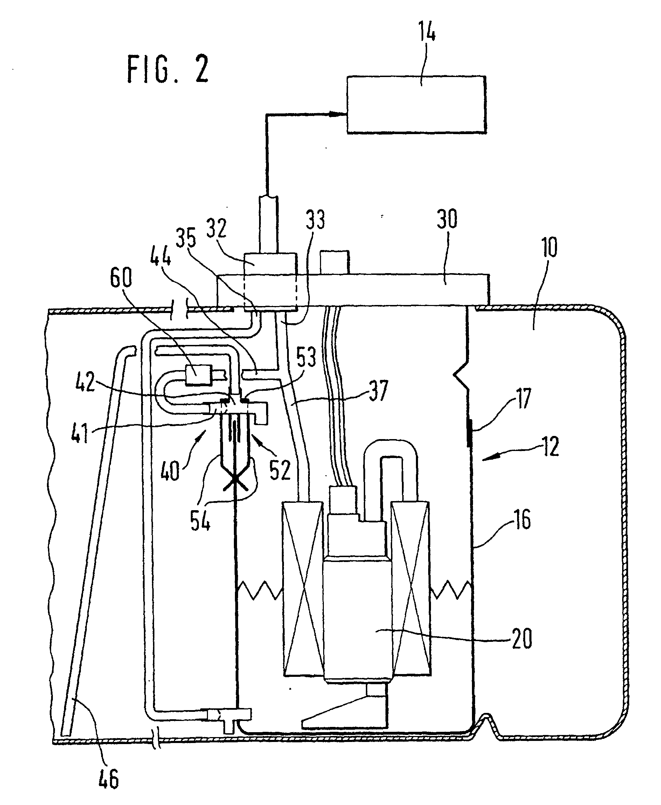

In Figur 2 ist die Kraftstoffördereinrichtung 12 gemäß einem zweiten Ausführungsbeispiel dargestellt, wobei deren grundsätzlicher Aufbau gegenüber dem vorstehend beschriebenen ersten Ausführungsbeispiel unverändert ist und nur in den nachfolgend beschriebenen Teilen Abweichungen bestehen. Alternativ oder zusätzlich zu der Rastverbindung der Baueinheit 40 am Behälter 16 ist bei der Kraftstoffördereinrichtung gemäß dem zweiten Ausführungsbeispiel ein Halteelement 52 vorgesehen, durch das die die Saugstrahlpumpe 40 bildende Baueinheit am Rand 17 des Behälters 16 befestigt ist. Das Halteelement 52 ist beispielsweise klammerartig ausgebildet und kann aus kraftstoffbeständigem Kunststoff oder Metall bestehen. Das Halteelement 52 kann beispielsweise einen die Baueinheit 40 übergreifenden Abschnitt 53 aufweisen sowie einen oder mehrere am Rand 17 des Behälters 16 angreifende Arme 54. Die Arme 54 können sich beispielsweise zur Befestigung der Baueinheit 40 am Rand 17 des Behälters 16 verkrallen, wenn das Halteelement 52 aus Metall besteht. Alternativ kann das Halteelement 52 auch rastartig am Rand 17 des Behälters 16 befestigbar sein.

Abweichend zum ersten Ausführungsbeispiel ist bei der Kraftstoffördereinrichtung 12 gemäß dem zweiten Ausführungsbeispiel die an die Treibdüse 41 der Saugstrahlpumpe 40 angeschlossene Treibleitung 44 nicht mit dem Rücklauf 35 des Druckreglers 32 verbunden sondern zweigt von der Leitung 37 ab, die die Druckseite des Förderaggregats 20 mit dem Zulauf 33 des Druckreglers 32 verbindet. In der Treibleitung 44 kann ein Druckventil 60 angeordnet sein, das die Treibleitung 44 erst bei Überschreiten eines bestimmten Drucks auf der Druckseite des Förderaggregats 20 freigibt, um beim Starten der Brennkraftmaschine 14 eine ausreichende Kraftstofförderung zu dieser zu ermöglichen. Diese Verbindung der Treibleitung 44 mit der Leitung 37 zwischen der Druckseite des Förderaggregats 20 und dem Zulauf 33 des Druckreglers 32 ist unabhängig von der Befestigung der Saugstrahlpumpe 40 am Behälter 16 und kann daher auch bei der Kraftstoffördereinrichtung 12 gemäß dem ersten Ausführungsbeispiel vorgesehen werden anstelle der Verbindung der Treibleitung 44 mit der Leitung 36. Die an das Mischrohr 42 angeschlossene Saugleitung 46 mündet an einer vom Behälter 16 entfernten Stelle im Vorratstank 10.

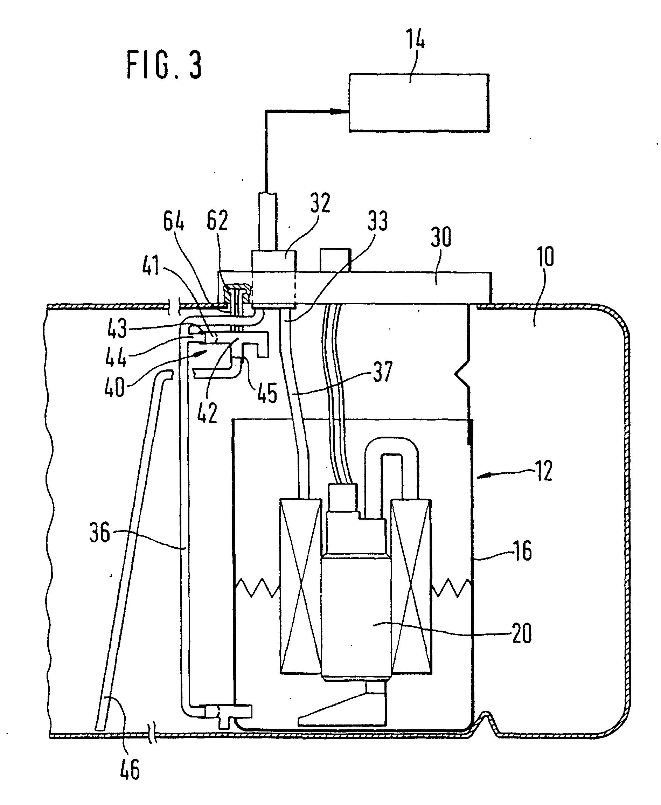

In Figur 3 ist die Kraftstoffördereinrichtung 12 gemäß einem dritten Ausführungsbeispiel dargestellte, bei dem wiederum der grundsätzliche Aufbau wie beim ersten Ausführungsbeispiel ist und nur bei den nachfolgend erläuterten Teilen Abweichungen bestehen. Die Säugstrahlpumpe 40 ist nicht am Behälter 16 befestigt sondern an der in den Vorratstank 10 weisenden Innenseite des Verschlußelements 30. Die Ausbildung der Saugstrahlpumpe 40 als Baueinheit mit Treibdüse 41, Mischrohr 42 sowie den Anschlüssen 43 und 45 ist gleich wie beim ersten Ausführungbeispiel. Das Verschlußelement 30 kann an seiner Innenseite eine Vertiefung 62 aufweisen, in die ein von der die Saugstrahlpumpe 40 bildenden Baueinheit nach oben abstehender Ansatz 64 einsetzbar ist und in dieser kraftund/oder formschlüssig gehalten wird, beispielsweise durch federnde Zusammendrückung des Ansatzes 64 oder durch eine Rastverbindung. Alternativ kann das Verschlußelement 30 auch einen von dessen Innenseite abstehenden Ansatz aufweisen, an dem die die Saugstrahlpumpe 40 bildende Baueinheit kraftund/oder formschlüssig befestigbar ist. Das Verschlußelement 30 ist allgemein derart ausgebildet, daß die die Saugstrahlpumpe 40 bildende Baueinheit in einfacher Weise an diesem befestigt werden kann, wobei zur Befestigung der Saugstrahlpumpe 40 auch wie beim zweiten Ausführungsbeispiel ein separates Halteelement vorgesehen sein kann. Die Treibdüse 41 der Saugstrahlpumpe 40 ist über deren Anschluß 43 mit der Treibleitung 44 verbunden, die wiederum mit der Rücklaufleitung 36 des Druckreglers 32 oder mit der Leitung 37 zwischen der Druckseite des Förderaggregats 20 und dem Zulauf 33 des Druckreglers 32 verbunden ist. Die am Mischrohr 42 angeschlossene Saugleitung 46 der Saugstrahlpumpe 40 mündet im Vorratstank 10 entfernt vom Behälter 16.

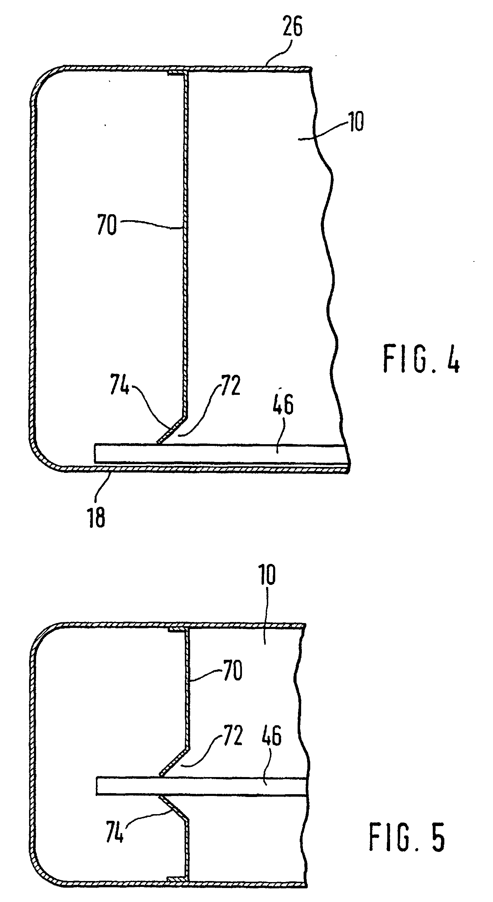

In den Figuren 4 und 5 ist der Vorratstank 10 in Längsschnitten in einem vom Behälter 16 entfernten Bereich dargestellt. Im Vorratstank 10 ist eine sogenannte Stehwand 70 eingebracht, die sich zwischen dem Boden 18 und der oberen Wand 26 des Vorratstanks 10 erstreckt. Die Stehwand 70 weist eine Öffnung 72 für den Durchtritt der Saugleitung 46 der Saugstrahlpumpe 40 auf. Die Öffnung 72 kann nahe dem Boden 18 des Vorratstanks 10 angeordnet sein, wobei die Saugleitung 46 zwischen der Stehwand 70 und dem Boden 18 des Vorratstanks 10 angeordnet sien kann. Die Öffnung 72 kann mit einer Einführschräge 74 versehen sein, um ein leichtes Durchstecken der Saugleitung 46 zu ermöglichen. Die Saugleitung 46 wird durch die Stehwand 70 in ihrer Lage fixiert, so daß deren Mündung sich in dem vorgesehenen Bereich des Vorratstanks 10 befindet und durch die Saugstrahlpumpe 40 aus diesem Bereich Kraftstoff in den Behälter 16 gefördert wird. In ihrer Längsrichtung ist die Saugleitung 46 bezüglich der Stehwand 70 noch etwas beweglich, so daß Längenabweichungen der Saugleitung 46 ausgeglichen werden können.

## Patentansprüche

1. Kraftstoffördereinrichtung zum Fördern von Kraftstoff aus einem Vorratstank (10) zur Brennkraftmaschine (14) eines Kraftfahrzeugs mit einem im Vorratstank (10) angeordneten Behälter (16), mit einem Kraftstoff aus dem Behälter (16) zur Brennkraftmaschine (14) fördernden Förderaggregat (20) und mit wenigstens einer Saugstrahlpumpe (40), die Kraftstoff aus dem Vorratstank (10) in den Behälter (16) fördert und die am Behälter (16) angeordnet ist, **dadurch gekennzeichnet, daß** die wenigstens eine Saugstrahlpumpe (40) an einem oberen Randbereich (17) des Behälters (16) als separate Baueinheit befestigt ist.

2. Kraftstoffördereinrichtung nach Anspruch 1, **dadurch gekennzeichnet, daß** die Saugstrahlpumpe (40) auf eine Wand des Behälters (16) an dessen oberem Randbereich (17) aufgesteckt ist.

3. Kraftstoffördereinrichtung nach Anspruch 1 oder 2, **dadurch gekennzeichnet, daß** die Saugstrahlpumpe (40) mittels einer Rastverbindung (49,50) am Behälter (16) befestigt ist.

4. Kraftstoffördereinrichtung nach Anspruch 1 oder 2, **dadurch gekennzeichnet, daß** die Saugstrahlpumpe (40) mittels eines zusätzlichen Halteelements (52) am Behälter (16) befestigt ist.

5. Kraftstoffödereinrichtung zum Fördern von Kraftstoff aus einem Vorratstank (10) zur Brennkraftmaschine (14) eines Kraftfahrzeugs mit einem im Vorratstank (10) angeordneten Behälter (16), mit einem Kraftstoff aus dem Behälter (16) zur Brennkraftmaschine (14) fördernden Förderaggregat (20) und mit wenigstens einer Saugstrahlpumpe (40), die Kraftstoff aus dem Vorratstank (10) in den Behälter (16) fördert, **dadurch gekennzeichnet, daß** der Vorratstank (10) wenigstens eine Öffnung (28) aufweist, durch die der Behälter (16) in den Vorratstank (10) einführbar ist und die mittels eines Verschlußelements (30) abdeckbar ist und daß die Saugstrahlpumpe (40) als separate Baueinheit an der in den Vorratstank (10) weisenden Innenseite des Verschlußelements (30) befestigt ist.

6. Kraftstoffördereinrichtung nach Anspruch 5, **dadurch gekennzeichnet, daß** die Saugstrahlpumpe (40) mittels einer Rastverbindung am Verschlußelement (30) befestigt ist.

7. Kraftstofförrdereinrichtung nach Anspruch 5, **dadurch gekennzeichnet, daß** die Saugstrahlpumpe (40) mittels eines zusätzlichen Halteelements am Verschlußelement (30) befestigt ist.

8. Kraftstoffördereinrichtung nach einem der Ansprüche 1 bis 7, **dadurch gekennzeichnet, daß** die Saugstrahlpumpe (40) eine Baueinheit umfassend eine Treibdüse (41), ein dieser nachgeordnetes Mischrohr (42), einen in die Treibdüse (41) mündenden Anschluß (43) für eine Treibleitung (44) und einem in das Mischrohr (42) mündenden Anschluß (45) für eine Saugleitung (46) aufweist.

9. Kraftstoffördereinrichtung nach Anspruch 8, **dadurch gekennzeichnet, daß** die Baueinheit der Saugstrahlpumpe (40) einstückig ausgebildet ist und insbesondere aus Kunststoff durch Spritzgießen hergestellt ist.

## Claims

1. Fuel feed device for feeding fuel from a reservoir tank (10) to the internal combustion engine (14) of a motor vehicle having a container (16) arranged in the reservoir tank (10), having a feed unit (20) which feeds fuel from the container (16) to the internal combustion engine (14) and having at least one suction jet pump (40) which feeds fuel from the reservoir tank (10) into the container (16) and which is arranged on the container (16), **characterized in that** the at least one suction jet pump (40) is attached to an upper edge region (17) of the container (16) as a separate physical unit.

2. Fuel feed device according to Claim 1, **characterized in that** the suction jet pump (40) is plugged onto a wall of the container (16) at its upper edge region (17).

3. Fuel feed device according to Claim 1 or 2, **characterized in that** the suction jet pump (40) is attached to the container (16) by means of a latching connection (49, 50).

4. Fuel feed device according to Claim 1 or 2, **characterized in that** the suction jet pump (40) is attached to the container (16) by means of an additional securing element (52).

5. Fuel feed device for feeding fuel from a reservoir tank (10) to the internal combustion engine (14) of a motor vehicle having a container (16) which is arranged in the reservoir tank (10), having a feed unit (20) which feeds fuel from the container (16) to the internal combustion engine (14) and having at least one suction jet pump (40) which feeds fuel from the reservoir tank (10) into the container (16), **characterized in that** the reservoir tank (10) has at least one opening (28) through which the container (16) can be introduced into the reservoir tank (10) and which can be covered by means of a closure element (30), and **in that** the suction jet pump (40) is attached, as a separate physical unit, to the inside of the closure element (30) which points into the reservoir tank (10).

6. Fuel feed device according to Claim 5, **characterized in that** the suction jet pump (40) is attached to the closure element (30) by means of a latching connection.

7. Fuel feed device according to Claim 5, **characterized in that** the suction jet pump (40) is attached to the closure element (30) by means of an additional securing element.

8. Fuel feed device according to one of Claims 1 to 7, **characterized in that** the suction jet pump (40) has a physical unit comprising a drive nozzle (41), a mixing pipe (42) which is arranged downstream of the latter, a port (43), opening into the drive nozzle (41), for a drive line (44) and a port (45), opening into the mixing pipe (42), for a suction line (46).

9. Fuel feed device according to Claim 8, **characterized in that** the physical unit of the suction jet pump (40) is constructed in one piece and is manufactured in particular from plastic by means of injection moulding.

## Revendications

1. Dispositif de refoulement de carburant pour refouler du carburant à partir d'un réservoir principal (10) vers le moteur à combustion interne (14) d'un véhicule automobile avec un récipient (16) placé dans le réservoir principal (10), avec une unité de refoulement (20) refoulant le carburant depuis le récipient (16) vers le moteur à combustion interne (14) et avec au moins une pompe à jet aspirant (40) qui refoule le carburant depuis le réservoir principal (10) dans le récipient (16) et qui est placée sur le récipient (16),
**caractérisé en ce que**
la pompe à jet aspirant (40) au moins unique est fixée sur une zone de bord (17) supérieure du récipient (16) en tant qu'unité constructive distincte.

2. Dispositif de refoulement de carburant selon la revendication 1,
**caractérisé en ce que**
la pompe à jet aspirant (40) est placée sur une paroi du récipient (16) sur sa zone de bord (17) supérieure.

3. Dispositif de refoulement de carburant selon la revendication 1 ou 2,
**caractérisé en ce que**
la pompe à jet aspirant (40) est fixée sur le récipient (16) au moyen d'une liaison à encoches (49, 50).

4. Dispositif de refoulement de carburant selon la revendication 1 ou 2,
**caractérisé en ce que**
la pompe à jet aspirant (40) est fixée sur le récipient (16) au moyen d'un élément de maintien (52) supplémentaire.

5. Dispositif de refoulement de carburant pour refouler du carburant à partir d'un réservoir principal (10) vers le moteur à combustion interne (14) d'un véhicule automobile avec un récipient (16) placé dans le réservoir principal (10), avec une unité de refoulement (20) refoulant le carburant depuis le récipient (16) vers le moteur à combustion interne (14) et avec au moins une pompe à jet aspirant (40) qui refoule le carburant depuis le réservoir principal (10) dans le récipient (16),
**caractérisé en ce que**
le réservoir principal (10) présente au moins une ouverture (28) par laquelle le récipient (16) peut être introduit dans le réservoir principal (10) et qui peut être recouverte à l'aide d'un élément de fermeture (30), et la pompe à jet aspirant (40) est fixée en tant qu'unité constructive distincte sur le côté intérieur de l'élément de fermeture (30) orienté vers le réservoir principal (10).

6. Dispositif de refoulement de carburant selon la revendication 5,
**caractérisé en ce que**
la pompe à jet aspirant (40) est fixée à l'élément de fermeture (30) à l'aide d'une liaison à encoches.

7. Dispositif de refoulement de carburant selon la revendication 5,
**caractérisé en ce que**
la pompe à jet aspirant (40) est fixée à l'élément de fermeture (30) à l'aide d'un élément de maintien supplémentaire.

8. Dispositif de refoulement de carburant selon l'une des revendications 1 à 7,
**caractérisé en ce que**
la pompe à jet aspirant (40) présente une unité constructive comprenant une buse de propulsion (41), un tube mélangeur (42) en aval de celle-ci, un raccord (43) débouchant dans la buse de propulsion (41) pour une conduite de propulsion (44) et un raccord (45) débouchant dans le tube mélangeur (42) pour une conduite d'aspiration (46).

9. Dispositif de refoulement de carburant selon la revendication 8,
**caractérisé en ce que**
l'unité constructive de la pompe à jet aspirant (40) est formée d'une seule pièce et est en particulier fabriquée en matière synthétique par moulage par injection.
